# EUROPEAN PATENT SPECIFICATION

(11) **EP 4 627 158 B1**
(45) Date of publication and mention of the grant of the patent: **11.11.2026**
(21) Application number: 23813714.5
(22) Date of filing: 28.11.2023
(51) Int. Cl.: E02D 27/50, B63B 21/29

(54) **PROCESS OF ANCHORING A FLOATING PLATFORM ON A ROCKY SEABED**
VERFAHREN ZUR VERANKERUNG EINER SCHWIMMENDEN PLATTFORM AUF EINEM GESTEINARTIGEN MEERESBODEN
PROCÉDÉ D'ANCRAGE D'UNE PLATE-FORME FLOTTANTE SUR UN FOND MARIN ROCHEUX

(30) Priority: 28.11.2022 EP 22306747
(43) Date of publication of application: 08.10.2025
(73) Proprietor: TotalEnergies OneTech, 92400 Courbevoie (FR)
(72) Inventor: CAILLET, Benoit, 92400 COURBEVOIE (FR)
(74) Representative: Lavoix
(86) International application number: PCT/EP2023/083277
(87) International publication number: WO 2024/115444

(56) References cited:
- WO-A1-2022/018147
- CN-A- 111 017 116
- US-A- 3 785 158
- US-A1- 2009 020 065
- US-A1- 2020 071 904

## Description

The present invention deals with a process of anchoring a floating platform on a rocky seabed, comprising connecting a mooring steel chain to an anchor structure and to the platform.

It also deals with a corresponding anchoring system.

The growing industry of offshore wind and oil and gas projects pushes states or developers to consider more and more offshore areas. In some of them, soil conditions may represent a challenge to common industry practices for the installation of mooring points, such as drag anchors, driven piles or suction piles. Indeed, these technologies are not suited to a rocky seabed.

Drilled and grouted piles usually have a 3m diameter. Installing them requires digging a 20m deep hole, and filling the annulus between the pile and the rock with grout. They require investigating the seabed over a depth of more than 20m. The solution of drilled and grouted piles is in fact very challenging for water depths where jack-ups cannot be jacked, e.g. for water depths over 60m. There is also limited experience in drilling with a vessel using dynamic positioning and a heave compensated platform. Moreover, drilling is subject to risks, such as weather and ocean conditions, and technical problems such as hole collapse, very hard rock, management of cuttings.... The number of drilling contractors is quite limited in the world.

This explains why using piles for anchoring purposes is expensive.

Gravity based structures filled with sand and gravel represent an alternative. However, they lead to large structures occupying a surface of about 20m x 20m. They require thousands of tons of sand or gravel for ballasting. In the end, they are also quite expensive, and have a non-negligible environmental footprint because of their footprint and influence over the water column.

WO 2022/018147 discloses an anchoring process comprising installing at least one lower section of a mooring line in a seabed and trapping the lower section in the seabed.

An aim of the invention is to provide an anchoring process adapted to a rocky seabed allowing reducing costs and environmental footprint.

To this end, the invention proposes a process of anchoring a floating platform according to claim 1.

In other embodiments, the process comprises one or several of the features corresponding to claims 2 to 14, taken in isolation or any technically feasible combination.

The invention also deals with an anchoring system according to claim 15.

The invention and its advantages will be better understood upon reading the following description, given solely by way of example and with reference to the appended drawings, in which:
- Figure 1 is a schematic side view of an anchoring system according to the invention,
- Figure 2 is a schematic side view of the anchoring system shown in Figure 1,
- Figure 3 is a schematic side view of the first extremity of the anchor structure of the anchoring system shown in Figures 1 and 2,
- Figures 4 to 7 are schematic side views showing successive phases of the construction of the anchoring system shown in Figures 1 and 2, in order to illustrate a process according to the invention, and
- Figure 8 is a schematic side view an anchoring system according to a variant of the system shown in Figures 1 and 2.

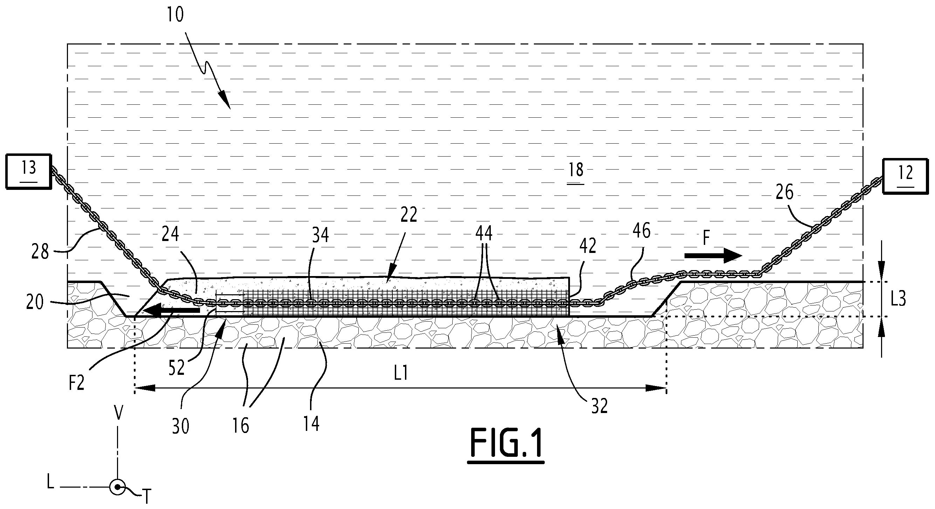

An anchoring system 10 according to the invention will now be described with reference to Figures 1 to 3 mainly.

The anchoring system 10 is adapted for anchoring a floating platform 12 (symbolized by a square in Figure 1) to a rocky seabed 14.

In the example, the anchoring system 10 is also adapted for anchoring a second floating platform 13 (symbolized by a square in Figure 1). In this case, the anchoring system 10 is a mutual one, which allows using a seabed location for anchoring several floating platforms.

By "rocky" seabed, it is meant here that the seabed 14 comprises rocks 16, to which the anchoring system 10 is fixed. The strength of the anchoring system 10 depends on the strength of rock (from very weak to very strong) and the level of fracturation, from highly weathered/fractured (Rock Quality Designation: worse) to no weathered/fractured (Rock Quality Designation: excellent).

The platform 12 for example hosts a wind turbine (not shown). The platform 12 and the second platform 13 float on or in a body of water 18 (see, ocean or lake) extending over the seabed 14. The floating platforms 12, 13 may float at the surface of the body of water 18, or below the surface.

The anchoring system 10 comprises a trench portion 20 located in the seabed 14 and extending along a longitudinal direction L, an anchor structure 22 located in the trench portion, grout 24 located in the trench portion, and a mooring steel chain 26 connected to the platform 12 and to the anchor structure.

In the example, the anchoring system 10 comprises a second mooring chain 28 connected to the second platform 13 and to the anchor structure 22.

The anchoring system 10 is advantageously designed to resist traction forces F1, F2 applied by the mooring chain 26 and the second mooring chain 28 on the anchor structure 22, for example up to 10000kN each. The anchoring system 10 is advantageously designed to have a lifespan of at least 25 years.

A transverse direction T is also defined as perpendicular to the line L and horizontal.

The longitudinal direction L is for example horizontal.

As a variant (not shown), the longitudinal direction L may be inclined in order to follow a seabed with a gentle slope.

The traction forces F1, F2 are for example parallel to the seabed 14 (case of a catenary mooring system). As a variant (not shown), the traction forces F1, F2 may have a component perpendicular to the seabed 14.

The trench portion 20 may be natural, from previous digging, or preferably from dedicated digging.

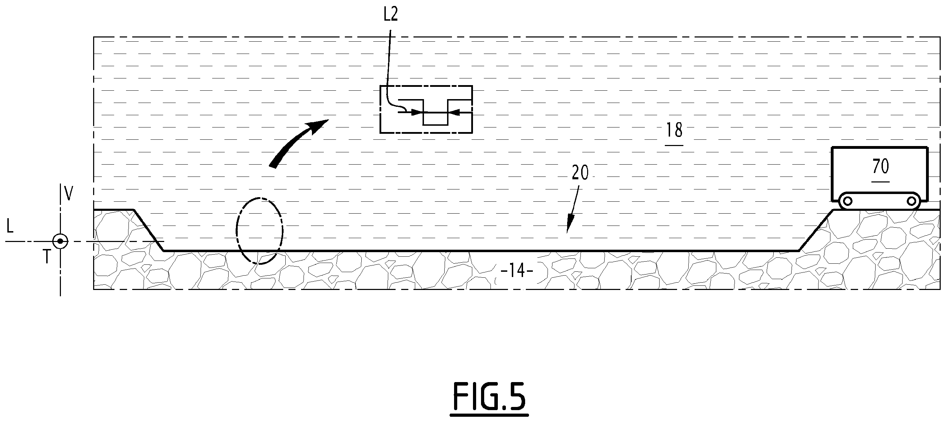

As symbolized in Figure 5, the trench portion 20 for example has a U-shaped section perpendicularly to the longitudinal direction L.

The trench portion 20 for example has a length L1 along the line L comprised between 5.0m and 40m, advantageously between 10m and 30m.

The trench portion 20 for example has an average horizontal width L2 perpendicularly to the longitudinal direction L, said width being comprised between 0.3m and 2.5m, advantageously between 0.5m and 2.0m.

The trench portion 20 for example has an average depth L3 comprised between 1.0m and 5.0m, advantageously between 1.0m and 2.5m.

The anchor structure 22 has a first extremity 30 and a second extremity 32 opposite each other longitudinally.

In the example, the anchor structure 22 is entirely located in the trench portion 20. In other words, the anchor structure 22 is below the seabed level. The anchor structure 22 advantageously extends over more than 90% of the trench portion 20 along the longitudinal direction L.

The anchor structure 22 is advantageously fully surrounded by the grout 24 around the longitudinal direction L. The grout 24 aims at ensuring a sealing of the anchor structure 22 with the surrounding seabed 14.

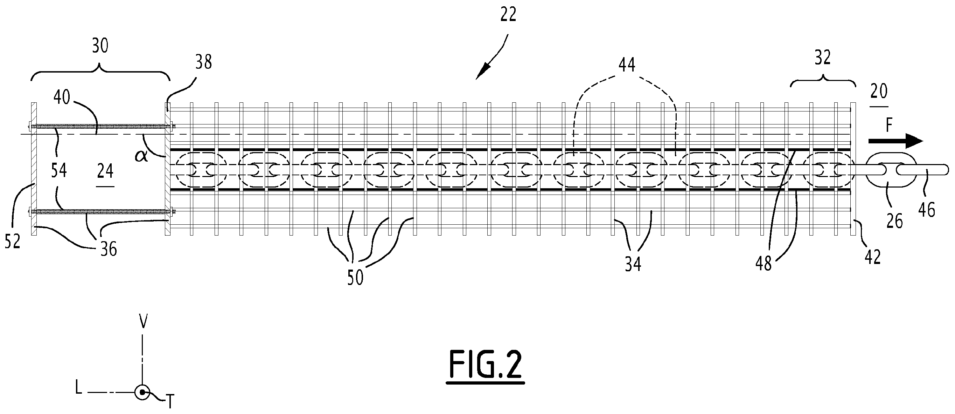

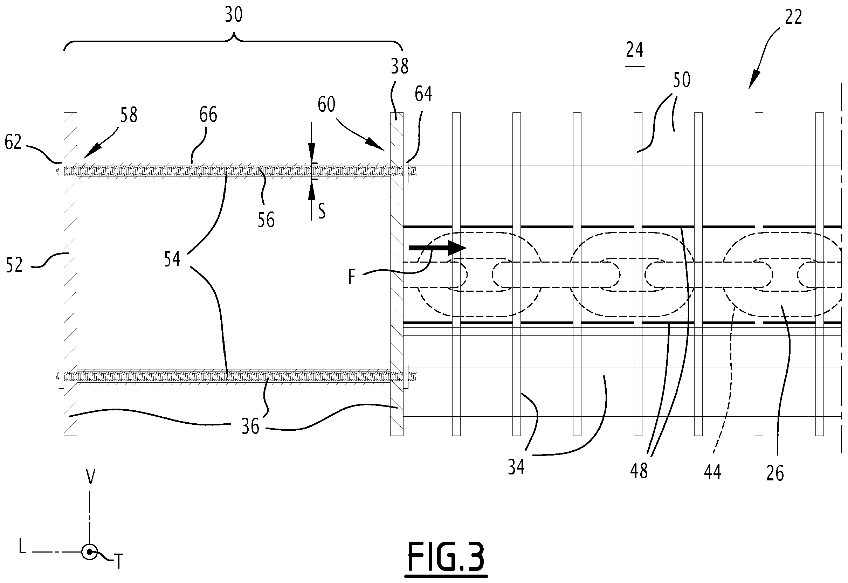

As shown in Figures 2 and 3, the anchor structure 22 comprises a steel reinforcement cage 34 extending in the longitudinal direction L, and a chain supporting system 36 fixed to the reinforcement cage and including at least one plate 38.

According to a particular embodiment, the anchor structure 22 comprises at least one grout line 40 extending in the longitudinal direction L.

Advantageously, the anchor structure 22 comprises a second plate 42 located in the second extremity 32 and fixed to the reinforcing cage 34.

In the example, the mooring chain 26 is attached on said plate 38, which is for example located in the first extremity 30. The mooring chain 26 has an inner portion 44 with respect to the anchor structure 22, and an outer portion 46.

The inner portion 44 extends longitudinally within the reinforcement cage 34 from said plate 38 to the second extremity 32. The inner portion 44 is surrounded by a sleeve 48 of the anchor structure 22 adapted for isolating the inner portion 44 from the injected grout 24.

The outer portion 46 extends from the second extremity 32 on the other side of the first extremity 30 with respect to the second extremity 32.

The second mooring chain 28 has an outer portion 49 with respect to the anchor structure 22, the outer portion extending from the first extremity 30 on the other side of the second extremity 32 with respect to the first extremity 30.

The steel reinforcement cage 34 is for example analogous to those used in reinforced concrete. The steel reinforcement cage 34 comprises steel bars 50 welded on each other at regular intervals, some being oriented longitudinally, some being perpendicular to the longitudinal direction L.

The chain supporting system 36 is for example made of steel.

The chain supporting system 36 advantageously comprises another plate 52 located in the first extremity 30, longitudinally on the other side of the mooring chain 26 with respect to said plate 38, and a plurality of tensioning bars 54 longitudinally connecting said another plate 52 and said plate 38, the reinforcement cage 34 extending only on the side of the mooring chain 26 with respect to said plate 38.

Each of the plates 38, 42, 52 respectively forms an angle with the longitudinal direction L, said angle being comprised between 75° and 105°. In the example, the plates 38, 42, 52 are for example perpendicular to the longitudinal direction L.

Said plate 38 is adapted for longitudinally compressing at least a portion of the grout 24 located within the reinforcement cage 34 when said traction force F is applied.

The second plate 42 is adapted to prevent the injected grout 24 from pouring longitudinally on the side of the outer portion 46 of the mooring chain 26 with respect to the second plate 42.

For example, each of the tensioning bars 54 comprises a steel bar 56 having at least two longitudinal extremities 58, 60 threaded, and at least two nuts 62, 64 respectively screwed on the two extremities.

The steel bar 56 advantageously for example has a cross section S of at least 1600 mm² is advantageously surrounded by a sleeve 66 of the chain supporting system 36, in order to isolate the steel bar from the injected grout 24.

The two nuts 62, 64 apply longitudinal pressure on said plate 38 and said other plate 52 towards each other.

The grout line 40 is adapted to deliver grout within the trench portion 20 when grout is injected under pressure in it, for example at one of its extremities along the longitudinal direction L.

The grout 24 is for example a Portland grout and is adapted for curing underwater.

The grout 24 advantageously fills the trench portion 20, for example up to seabed level over at least 90% of the anchor structure 22 along the line L.

Advantageously, the grout 24 is adapted to develop a shear friction against the trench portion 20 rocky walls of as a minimum 100 kPa.

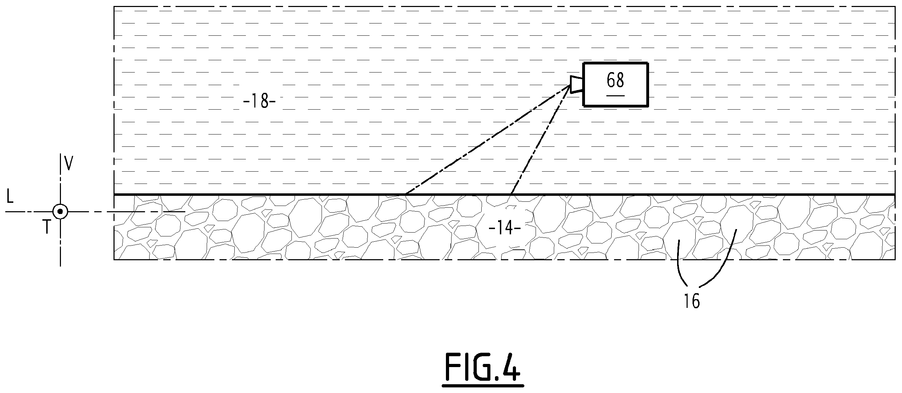

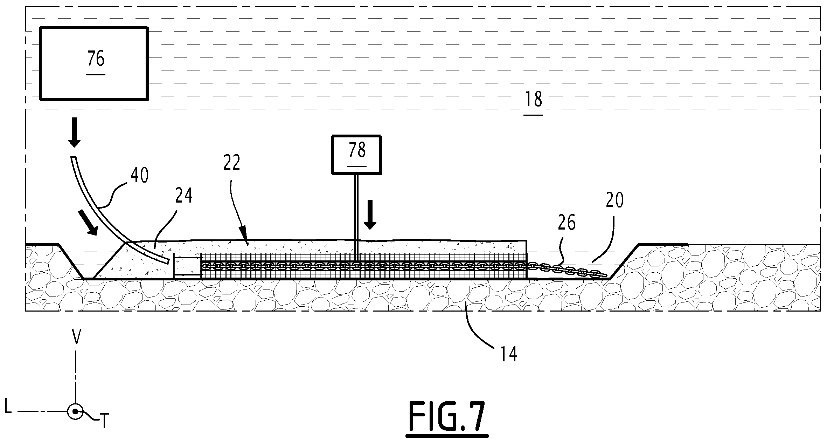

A process of anchoring the floating platform 12 on the seabed 14, using the anchoring system 10, will now be described with reference to Figures 4 to 7.

Optionally, as shown in Figure 4, the seabed 14 is first surveyed for example by a remotely operated vehicle 68. Goal is to detect possible obstacles which could cause issues with the installation. One may also rely on previous knowledge of the seabed 14 such as bathymetry and seabed imagery.

Then the trench portion 20 is provided in the seabed 14. For example, as shown in Figure 5, the trench portion is dug using a subsea trencher 70 commonly used for pipeline or cables burial.

The remotely operated vehicle 68 and the subsea trencher 70 are equipment known in themselves and available from the market.

As a variant, for example in case of a rough seabed 14 with some benches, the trench portion 20 is an existing one, and does not have to be dug.

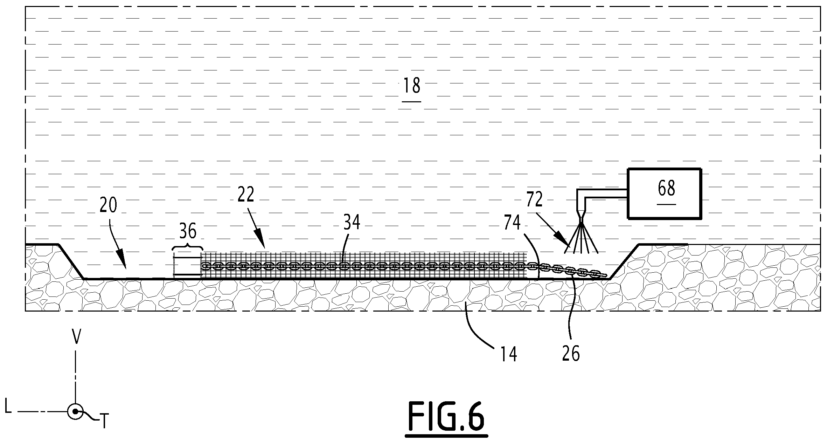

Optionally, the trench portion 20 is cleaned, advantageously using water jets 72 (Figure 6) directed at walls 74 of the trench portion. The jets 72 are for example produced by the remotely operated vehicle 68.

Then, the anchor structure 22 is installed, for example pre-assembled and lowered, in the trench portion 20, as shown in Figure 6.

The mooring chain 26, and in the example the second mooring chain 28, are connected to the chain supporting system 36.

Afterwards, grout is injected in the trench portion 20, in the example via the grout line 40 from a source 76, in order to obtain the grout 24.

Advantageously, grouting is stopped when the trench portion 20 is full of grout, or at least when the anchor structure 22 is surrounded by grout.

After curing, the mooring chain 26 is connected to the platform 12, and is tensioned. In the example, the same is performed with the second mooring chain 28 and the second platform 13.

The platforms 12, 13 may exert traction forces on the anchor structure 22 within a reasonable angle with respect to the longitudinal line L.

Thanks to the above features, the anchoring process is adapted to the rocky seabed 14 and preferably catenary mooring solutions, and allows reducing costs and the environmental footprint.

Design is fast. Limited soil investigation, for example over the top 3m of the seabed 14, is enough. All pieces of equipment are available in the market and easy to procure. The final assembly of the anchor structure 22 can be done locally. Installation is fast and requires only a dynamic positioning vessel. No pretension is needed.

The anchoring process advantageously allows anchoring several floating platforms 12, 13.

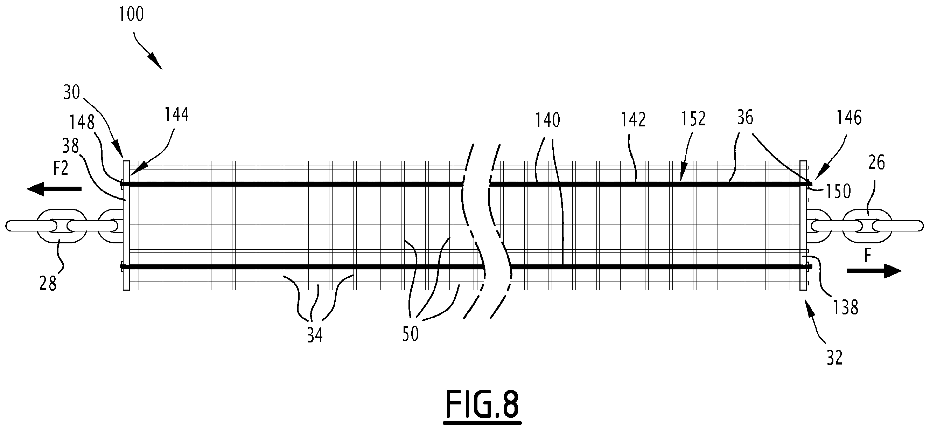

An anchoring system 100 according to a variant of the invention will now be described with reference to Figure 8. The anchoring system 100 is analogous to the anchoring system 10 shown in Figures 1 to 3. Similar elements bear the same numeral references and will not be described again. Only the differences will be described in detail.

The chain supporting system 36 comprises a second plate 138 located in the second extremity 32, and a plurality of tensioning bars 140 longitudinally connecting said plate 38 and the second plate 138.

The mooring chain 26 is attached on the second plate 138, and for example has no inner part. No sleeve surrounds the mooring chain 26.

The second mooring chain 28 (optional) is for example connected to the plate 38.

For example, each of the tensioning bars 140 comprises a steel bar 142 having at least two longitudinal extremities 144, 146 threaded, and at least two nuts 148, 150 respectively screwed on the two extremities.

The steel bar 140 advantageously has a cross section of at least 1600 mm² and is advantageously surrounded by a sleeve 152 of the chain supporting system 36, in order to isolate the steel bar 140 from the injected grout 24.

The two nuts 148, 150 apply longitudinal pressure on said plate 38 and said second plate 138 towards each other.

The anchoring system 100 may be used in a similar manner to that of the anchoring system 10, in order to anchor one, two or more platforms 12, 13.

The two nuts 62, 64 apply longitudinal pressure on said plate 38 and said other plate 52 towards each other.

The grout line 40 is adapted to deliver grout within the trench portion 20 when grout is injected under pressure in it, for example at one of its extremities along the longitudinal direction L.

The grout 24 is for example a Portland grout and is adapted for curing underwater.

The grout 24 advantageously fills the trench portion 20, for example up to seabed level over at least 90% of the anchor structure 22 along the line L.

Advantageously, the grout 24 is adapted to develop a shear friction against the trench portion 20 rocky walls of as a minimum 100 kPa.

A process of anchoring the floating platform 12 on the seabed 14, using the anchoring system 10, will now be described with reference to Figures 4 to 7.

Optionally, as shown in Figure 4, the seabed 14 is first surveyed for example by a remotely operated vehicle 68. Goal is to detect possible obstacles which could cause issues with the installation. One may also rely on previous knowledge of the seabed 14 such as bathymetry and seabed imagery.

Then the trench portion 20 is provided in the seabed 14. For example, as shown in Figure 5, the trench portion is dug using a subsea trencher 70 commonly used for pipeline or cables burial.

The remotely operated vehicle 68 and the subsea trencher 70 are equipment known in themselves and available from the market.

As a variant, for example in case of a rough seabed 14 with some benches, the trench portion 20 is an existing one, and does not have to be dug.

Optionally, the trench portion 20 is cleaned, advantageously using water jets 72 (Figure 6) directed at walls 74 of the trench portion. The jets 72 are for example produced by the remotely operated vehicle 68.

Then, the anchor structure 22 is installed, for example pre-assembled and lowered, in the trench portion 20, as shown in Figure 6.

The mooring chain 26, and in the example the second mooring chain 28, are connected to the chain supporting system 36.

Afterwards, grout is injected in the trench portion 20, in the example via the grout line 40 from a source 76, in order to obtain the grout 24.

Advantageously, grouting is stopped when the trench portion 20 is full of grout, or at least when the anchor structure 22 is surrounded by grout.

After curing, the mooring chain 26 is connected to the platform 12, and is tensioned. In the example, the same is performed with the second mooring chain 28 and the second platform 13.

The platforms 12, 13 may exert traction forces on the anchor structure 22 within a reasonable angle with respect to the longitudinal line L.

Thanks to the above features, the anchoring process is adapted to the rocky seabed 14 and preferably catenary mooring solutions, and allows reducing costs and the environmental footprint.

Design is fast. Limited soil investigation, for example over the top 3m of the seabed 14, is enough. All pieces of equipment are available in the market and easy to procure. The final assembly of the anchor structure 22 can be done locally. Installation is fast and requires only a dynamic positioning vessel. No pretension is needed.

The anchoring process advantageously allows anchoring several floating platforms 12, 13.

An anchoring system 100 according to a variant of the invention will now be described with reference to Figure 8. The anchoring system 100 is analogous to the anchoring system 10 shown in Figures 1 to 3. Similar elements bear the same numeral references and will not be described again. Only the differences will be described in detail.

The chain supporting system 36 comprises a second plate 138 located in the second extremity 32, and a plurality of tensioning bars 140 longitudinally connecting said plate 38 and the second plate 138.

The mooring chain 26 is attached on the second plate 138, and for example has no inner part. No sleeve surrounds the mooring chain 26.

The second mooring chain 28 (optional) is for example connected to the plate 38.

For example, each of the tensioning bars 140 comprises a steel bar 142 having at least two longitudinal extremities 144, 146 threaded, and at least two nuts 148, 150 respectively screwed on the two extremities.

The steel bar 140 advantageously has a cross section of at least 1600 mm² and is advantageously surrounded by a sleeve 152 of the chain supporting system 36, in order to isolate the steel bar 140 from the injected grout 24.

The two nuts 148, 150 apply longitudinal pressure on said plate 38 and said second plate 138 towards each other.

The anchoring system 100 may be used in a similar manner to that of the anchoring system 10, in order to anchor one, two or more platforms 12, 13.

## Claims

1. A process of anchoring a floating platform (12) on a rocky seabed (14), comprising the following steps:
- providing a trench portion (20) in the seabed (14), the trench portion (20) defining a longitudinal direction (L),
- installing an anchor structure (22) in the trench portion (20), the anchor structure (22) comprising a steel reinforcement cage (34) extending in the longitudinal direction (L), and a chain supporting system (36) fixed to the reinforcement cage (34) and including at least one plate (38),
- connecting a mooring chain (26) to the chain supporting system (36),
- injecting grout (24) in the trench portion (20), the reinforcement cage (34) and the chain supporting system (36) being at least partly surrounded by the injected grout (24), and
- after curing of the injected grout (24), connecting the mooring chain (26) to the platform (12), the mooring chain (26) having an outer portion (46) with respect to the anchor structure (22), the anchor structure (22) having a first extremity (30) and a second extremity (32) opposite each other longitudinally, the outer portion (46) being intended to extend from the second extremity (32) on the other side of the first extremity (30) with respect to the second extremity (32), the floating platform (12) being intended to apply a traction force (F) on the anchor structure (22) via the mooring chain (26).

2. The process according to claim 1, wherein said plate (38) is adapted for longitudinally compressing at least a portion of the grout (24) located within the reinforcement cage (34) when said traction force (F) is applied.

3. The process according to claim 1 or 2, wherein providing the trench portion (20) includes digging the seabed (14) along the line (L) using a subsea trencher (70).

4. The process according to any one of claims claim 1 to 3, wherein said plate (38) forms an angle (α) with the longitudinal direction (L), said angle (α) being comprised between 75° and 105°.

5. The process according to any one of claims 1 to 4, wherein injecting the grout (24) includes using at least one grout line (40) of the anchor structure (22), said grout line (40) extending in the longitudinal direction (L), and/or using at least one stinger (78) in order to inject at least part of the grout (24).

6. The process according to any one of claims 1 to 5, wherein said plate (38) is located in the first extremity (30) of the anchor structure (22), the mooring chain (26) being attached on said plate (38) and having an inner portion (44) with respect to the anchor structure (22), the inner portion (44) extending longitudinally within the reinforcement cage (34) from said plate (38) to the second extremity (32).

7. The process according to claim 6, further comprising providing a sleeve (48) surrounding the inner portion (44) of the mooring chain (26) and adapted to isolate the inner portion (44) from the injected grout (24).

8. The process according to claim 5 or 6, wherein the anchor structure (22) comprises a second plate (42) located in the second extremity (32), fixed to the reinforcing cage, and adapted to prevent the injected grout (24) from pouring longitudinally on the side of the outer portion (46) of the mooring chain (26) with respect to the second plate (42).

9. The process according to any one of claims 1 to 5, wherein the chain supporting system (36) comprises a second plate (138) located in the second extremity (32), and a plurality of tensioning bars (140) longitudinally connecting said plate (36) and the second plate (138), the mooring chain (26) being attached on the second plate (138).

10. The process according claim 9, wherein each of the tensioning bars (140) comprises a steel bar (142) having at least its two longitudinal extremities (144, 146) threaded and at least two nuts (148, 150) respectively screwed on the two extremities (144, 146) and applying longitudinal pressure on said plate (38) and said second plate (138) towards each other.

11. The process according claim 10, comprising providing sleeves (152) respectively surrounding the steel bar (142) of each of the tensioning bars (140), and adapted to isolate the steel bar (142) from the injected grout (24).

12. The process according to any one of claims 1 to 10, wherein the chain supporting system (36) comprises another plate (52) located in the first extremity (30) longitudinally on the other side of the mooring chain (26) with respect to said plate (38), and a plurality of tensioning bars (54) longitudinally connecting said another plate (52) and said plate (38), the reinforcement cage (34) extending only on the side of the mooring chain (26) with respect to said plate (38).

13. The process according to any one of claims 1 to 12, wherein:
- the trench portion (20) has a U-shaped section perpendicularly to the longitudinal direction (L), and/or
- the trench portion (20) has a length (L1) along the longitudinal direction (L) comprised between 5.0m and 40m.

14. The process according to any one of claims 1 to 13, further comprising:
- connecting a second mooring chain (28) to the chain supporting system (36), and
- after curing of the injected grout (24), connecting the second mooring chain (28) to a second floating platform (13),
the second mooring chain (28) having an outer portion (46) with respect to the anchor structure (22), said outer portion (46) being intended to extend from the first extremity (30) of the anchor structure (22) on the other side of the second extremity (32) with respect to the first extremity (30), the second platform being intended to apply a second traction force (F2) on the chain supporting system (36) via the second mooring chain (28).

15. An anchoring system (10; 100) adapted for anchoring a floating platform (12) on a rocky seabed (14), the anchoring system (10; 100) comprising:
- at least one trench portion (20) located in the seabed (14) and extending along a longitudinal direction (L),
- an anchor structure (22) at least partly located in the trench portion (20), the anchor structure (22) comprising a steel reinforcement cage (34) extending in the longitudinal direction (L), and a chain supporting system (36) fixed to the reinforcement cage (34) and including at least one plate (38),
- grout (24) located in the trench portion (20), the reinforcement cage (34) and the chain supporting system (36) being at least partly surrounded by the grout (24), and
- a mooring steel chain (26) connected to the chain supporting system (36), the mooring chain (26) being intended to be connected to the floating platform (12), the mooring chain (26) having an outer portion (46) with respect to the anchor structure (22), the anchor structure (22) having a first extremity (30) and a second extremity (32) opposite each other longitudinally, the outer portion (46) being intended to extend from the second extremity (32) on the other side of the first extremity (30) with respect to the second extremity (32), the floating platform (12) being intended to apply a traction force (F) on the anchor structure (22) via the mooring chain (26).

## Patentansprüche

1. Verfahren zum Verankern einer schwimmenden Plattform (12) auf einem felsigen Meeresboden (14), umfassend die folgenden Schritte:
- Bereitstellen eines Grabenabschnitts (20) im Meeresboden (14), wobei der Grabenabschnitt (20) eine Längsrichtung (L) definiert,
- Installieren einer Ankerstruktur (22) in dem Grabenabschnitt (20), wobei die Ankerstruktur (22) einen sich in der Längsrichtung (L) erstreckenden Stahlbewehrungskorb (34) und ein an dem Bewehrungskorb (34) befestigtes Kettenstützsystem (36) umfasst, das mindestens eine Platte (38) einschließt,
- Verbinden einer Festmachekette (26) mit dem Kettenstützsystem (36),
- Injizieren von Vergussmörtel (24) in den Grabenabschnitt (20), wobei der Bewehrungskorb (34) und das Kettenstützsystem (36) zumindest teilweise von dem injizierten Vergussmörtel (24) umgeben sind, und
- nach dem Aushärten des injizierten Vergussmörtels (24), Verbinden der Festmachekette (26) mit der Plattform (12), wobei die Festmachekette (26) einen äußeren Abschnitt (46) in Bezug auf die Ankerstruktur (22) aufweist, wobei die Ankerstruktur (22) ein erstes Ende (30) und ein zweites Ende (32) aufweist, die einander in Längsrichtung gegenüberliegen, wobei der äußere Abschnitt (46) dazu bestimmt ist, sich von dem zweiten Ende (32) aus auf der anderen Seite des ersten Endes (30) in Bezug auf das zweite Ende (32) zu erstrecken, wobei die schwimmende Plattform (12) dazu bestimmt ist, über die Festmachekette (26) eine Zugkraft (F) auf die Ankerstruktur (22) auszuüben.

2. Verfahren nach Anspruch 1, wobei die Platte (38) dazu ausgelegt ist, zumindest einen innerhalb des Bewehrungskorbs (34) befindlichen Abschnitt des Vergussmörtels (24) in Längsrichtung zu komprimieren, wenn die Zugkraft (F) ausgeübt wird.

3. Verfahren nach Anspruch 1 oder 2, wobei das Bereitstellen des Grabenabschnitts (20) das Ausheben des Meeresbodens (14) entlang der Linie (L) unter Verwendung eines Unterwassergrabenfräsers (70) einschließt.

4. Verfahren nach einem der Ansprüche Anspruch 1 bis 3, wobei die Platte (38) einen Winkel (α) mit der Längsrichtung (L) bildet, wobei der Winkel (α) zwischen 75° und 105° liegt.

5. Verfahren nach einem der Ansprüche 1 bis 4, wobei das Injizieren des Vergussmörtels (24) die Verwendung mindestens einer Vergussleitung (40) der Ankerstruktur (22) und/oder die Verwendung mindestens eines Stingers (78) einschließt, um zumindest einen Teil des Vergussmörtels (24) zu injizieren, wobei sich die Vergussleitung (40) in der Längsrichtung (L) erstreckt.

6. Verfahren nach einem der Ansprüche 1 bis 5, wobei die Platte (38) in dem ersten Ende (30) der Ankerstruktur (22) angeordnet ist, wobei die Festmachekette (26) an der Platte (38) befestigt ist und einen inneren Abschnitt (44) in Bezug auf die Ankerstruktur (22) aufweist, wobei sich der innere Abschnitt (44) in Längsrichtung innerhalb des Bewehrungskorbs (34) von der Platte (38) bis zu dem zweiten Ende (32) erstreckt.

7. Verfahren nach Anspruch 6, ferner umfassend das Bereitstellen einer Hülse (48), die den inneren Abschnitt (44) der Festmachekette (26) umgibt und dazu ausgelegt ist, den inneren Abschnitt (44) von dem injizierten Vergussmörtel (24) zu isolieren.

8. Verfahren nach Anspruch 5 oder 6, wobei die Ankerstruktur (22) eine zweite Platte (42) umfasst, die in dem zweiten Ende (32) angeordnet, an dem Bewehrungskorb befestigt und dazu ausgelegt ist, zu verhindern, dass der injizierte Vergussmörtel (24) in Längsrichtung auf der Seite des äußeren Abschnitts (46) der Festmachekette (26) in Bezug auf die zweite Platte (42) ausläuft.

9. Verfahren nach einem der Ansprüche 1 bis 5, wobei das Kettenstützsystem (36) eine zweite Platte (138), die in dem zweiten Ende (32) angeordnet ist, und eine Mehrzahl von Spannstangen (140) umfasst, die die Platte (36) und die zweite Platte (138) in Längsrichtung verbinden, wobei die Festmachekette (26) an der zweiten Platte (138) befestigt ist.

10. Verfahren nach Anspruch 9, wobei jede der Spannstangen (140) eine Stahlstange (142) umfasst, deren mindestens zwei Längsenden (144, 146) mit einem Gewinde versehen sind, und mindestens zwei Muttern (148, 150), die jeweils auf die beiden Enden (144, 146) aufgeschraubt sind und Längsdruck auf die Platte (38) und die zweite Platte (138) in Richtung aufeinander ausüben.

11. Verfahren nach Anspruch 10, umfassend das Bereitstellen von Hülsen (152), die jeweils die Stahlstange (142) jeder der Spannstangen (140) umgeben und dazu ausgelegt sind, die Stahlstange (142) von dem injizierten Vergussmörtel (24) zu isolieren.

12. Verfahren nach einem der Ansprüche 1 bis 10, wobei das Kettenstützsystem (36) eine weitere Platte (52), die in dem ersten Ende (30) in Längsrichtung auf der anderen Seite der Festmachekette (26) in Bezug auf die Platte (38) angeordnet ist, und eine Mehrzahl von Spannstangen (54) umfasst, die die weitere Platte (52) und die Platte (38) in Längsrichtung verbinden, wobei sich der Bewehrungskorb (34) nur auf der Seite der Festmachekette (26) in Bezug auf die Platte (38) erstreckt.

13. Verfahren nach einem der Ansprüche 1 bis 12, wobei:
- der Grabenabschnitt (20) senkrecht zur Längsrichtung (L) einen U-förmigen Querschnitt aufweist, und/oder
- der Grabenabschnitt (20) eine Länge (L1) entlang der Längsrichtung (L) aufweist, die zwischen 5,0 m und 40 m liegt.

14. Verfahren nach einem der Ansprüche 1 bis 13, ferner umfassend:
- Verbinden einer zweiten Festmachekette (28) mit dem Kettenstützsystem (36), und
- nach dem Aushärten des injizierten Vergussmörtels (24), Verbinden der zweiten Festmachekette (28) mit einer zweiten schwimmenden Plattform (13),
wobei die zweite Festmachekette (28) einen äußeren Abschnitt (46) in Bezug auf die Ankerstruktur (22) aufweist, wobei der äußere Abschnitt (46) dazu bestimmt ist, sich von dem ersten Ende (30) der Ankerstruktur (22) aus auf der anderen Seite des zweiten Endes (32) in Bezug auf das erste Ende (30) zu erstrecken, wobei die zweite Plattform dazu bestimmt ist, über die zweite Festmachekette (28) eine zweite Zugkraft (F2) auf das Kettenstützsystem (36) auszuüben.

15. Verankerungssystem (10; 100), das zum Verankern einer schwimmenden Plattform (12) auf einem felsigen Meeresboden (14) ausgelegt ist, wobei das Verankerungssystem (10; 100) Folgendes umfasst:
- mindestens einen Grabenabschnitt (20), der in dem Meeresboden (14) angeordnet ist und sich entlang einer Längsrichtung (L) erstreckt,
- eine Ankerstruktur (22), die zumindest teilweise in dem Grabenabschnitt (20) angeordnet ist, wobei die Ankerstruktur (22) einen sich in der Längsrichtung (L) erstreckenden Stahlbewehrungskorb (34) und ein an dem Bewehrungskorb (34) befestigtes Kettenstützsystem (36) umfasst, das mindestens eine Platte (38) einschließt,
- Vergussmörtel (24), der in dem Grabenabschnitt (20) angeordnet ist, wobei der Bewehrungskorb (34) und das Kettenstützsystem (36) zumindest teilweise von dem Vergussmörtel (24) umgeben sind, und
- eine Stahlfestmachekette (26), die mit dem Kettenstützsystem (36) verbunden ist, wobei die Festmachekette (26) dazu bestimmt ist, mit der schwimmenden Plattform (12) verbunden zu werden, wobei die Festmachekette (26) einen äußeren Abschnitt (46) in Bezug auf die Ankerstruktur (22) aufweist, wobei die Ankerstruktur (22) ein erstes Ende (30) und ein zweites Ende (32) aufweist, die einander in Längsrichtung gegenüberliegen, wobei der äußere Abschnitt (46) dazu bestimmt ist, sich von dem zweiten Ende (32) aus auf der anderen Seite des ersten Endes (30) in Bezug auf das zweite Ende (32) zu erstrecken, wobei die schwimmende Plattform (12) dazu bestimmt ist, über die Festmachekette (26) eine Zugkraft (F) auf die Ankerstruktur (22) auszuüben.

## Revendications

1. Procédé d'ancrage d'une plateforme flottante (12) sur un fond marin rocheux (14), comprenant les étapes suivantes :
- mise à disposition d'une partie de tranchée (20) dans le fond marin (14), la partie de tranchée (20) définissant une direction longitudinale (L),
- installation d'une structure d'ancrage (22) dans la partie de tranchée (20), la structure d'ancrage (22) comprenant une cage d'armature en acier (34) s'étendant dans la direction longitudinale (L), et un système de support de chaîne (36) fixé à la cage d'armature (34) et comprenant au moins une plaque (38),
- raccordement d'une chaîne d'amarrage (26) au système de support de chaîne (36),
- injection de mortier (24) dans la partie de tranchée (20), la cage d'armature (34) et le système de support de chaîne (36) étant au moins partiellement entourés par le mortier injecté (24), et
- après durcissement du mortier injecté (24), raccordement de la chaîne d'amarrage (26) à la plateforme (12), la chaîne d'amarrage (26) ayant une partie extérieure (46) par rapport à la structure d'ancrage (22), la structure d'ancrage (22) ayant une première extrémité (30) et une seconde extrémité (32) opposées l'une à l'autre longitudinalement, la partie extérieure (46) étant destinée à s'étendre depuis la seconde extrémité (32) de l'autre côté de la première extrémité (30) par rapport à la seconde extrémité (32), la plateforme flottante (12) étant destinée à appliquer une force de traction (F) sur la structure d'ancrage (22) par l'intermédiaire de la chaîne d'amarrage (26).

2. Procédé selon la revendication 1, dans lequel ladite plaque (38) est adaptée pour comprimer longitudinalement au moins une partie du mortier (24) située à l'intérieur de la cage d'armature (34) lorsque ladite force de traction (F) est appliquée.

3. Procédé selon la revendication 1 ou 2, dans lequel la mise à disposition de la partie de tranchée (20) comprend le creusement du fond marin (14) le long de la ligne (L) à l'aide d'une trancheuse sous-marine (70).

4. Procédé selon l'une quelconque des revendications 1 à 3, dans lequel ladite plaque (38) forme un angle (α) avec la direction longitudinale (L), ledit angle (α) étant compris entre 75° et 105°.

5. Procédé selon l'une quelconque des revendications 1 à 4, dans lequel l'injection du mortier (24) comprend l'utilisation d'au moins une conduite de mortier (40) de la structure d'ancrage (22), ladite conduite de mortier (40) s'étendant dans la direction longitudinale (L), et/ou l'utilisation d'au moins un tube plongeur (78) afin d'injecter au moins une partie du mortier (24).

6. Procédé selon l'une quelconque des revendications 1 à 5, dans lequel ladite plaque (38) est située dans la première extrémité (30) de la structure d'ancrage (22), la chaîne d'amarrage (26) étant attachée à ladite plaque (38) et ayant une partie intérieure (44) par rapport à la structure d'ancrage (22), la partie intérieure (44) s'étendant longitudinalement à l'intérieur de la cage d'armature (34) depuis ladite plaque (38) jusqu'à la seconde extrémité (32).

7. Procédé selon la revendication 6, comprenant en outre la mise à disposition d'un manchon (48) entourant la partie intérieure (44) de la chaîne d'amarrage (26) et adapté pour isoler la partie intérieure (44) du mortier injecté (24).

8. Procédé selon la revendication 5 ou 6, dans lequel la structure d'ancrage (22) comprend une seconde plaque (42) située dans la seconde extrémité (32), fixée à la cage d'armature, et adaptée pour empêcher le mortier injecté (24) de s'écouler longitudinalement du côté de la partie extérieure (46) de la chaîne d'amarrage (26) par rapport à la seconde plaque (42).

9. Procédé selon l'une quelconque des revendications 1 à 5, dans lequel le système de support de chaîne (36) comprend une seconde plaque (138) située dans la seconde extrémité (32), et une pluralité de barres de tension (140) reliant longitudinalement ladite plaque (36) et la seconde plaque (138), la chaîne d'amarrage (26) étant attachée à la seconde plaque (138).

10. Procédé selon la revendication 9, dans lequel chacune des barres de tension (140) comprend une barre en acier (142) ayant au moins ses deux extrémités longitudinales (144, 146) filetées et au moins deux écrous (148, 150) respectivement vissés sur les deux extrémités (144, 146) et appliquant une pression longitudinale sur ladite plaque (38) et ladite seconde plaque (138) l'une vers l'autre.

11. Procédé selon la revendication 10, comprenant la mise à disposition de manchons (152) entourant respectivement la barre en acier (142) de chacune des barres de tension (140), et adaptés pour isoler la barre en acier (142) du mortier injecté (24).

12. Procédé selon l'une quelconque des revendications 1 à 10, dans lequel le système de support de chaîne (36) comprend une autre plaque (52) située dans la première extrémité (30) longitudinalement de l'autre côté de la chaîne d'amarrage (26) par rapport à ladite plaque (38), et une pluralité de barres de tension (54) reliant longitudinalement ladite autre plaque (52) et ladite plaque (38), la cage d'armature (34) s'étendant uniquement du côté de la chaîne d'amarrage (26) par rapport à ladite plaque (38).

13. Procédé selon l'une quelconque des revendications 1 à 12, dans lequel :
- la partie de tranchée (20) a une section en forme de U perpendiculairement à la direction longitudinale (L), et/ou
- la partie de tranchée (20) a une longueur (L1) le long de la direction longitudinale (L) comprise entre 5,0 m et 40 m.

14. Procédé selon l'une quelconque des revendications 1 à 13, comprenant en outre :
- raccordement d'une seconde chaîne d'amarrage (28) au système de support de chaîne (36), et
- après durcissement du mortier injecté (24), raccordement de la seconde chaîne d'amarrage (28) à une seconde plateforme flottante (13),
la seconde chaîne d'amarrage (28) ayant une partie extérieure (46) par rapport à la structure d'ancrage (22), ladite partie extérieure (46) étant destinée à s'étendre depuis la première extrémité (30) de la structure d'ancrage (22) de l'autre côté de la seconde extrémité (32) par rapport à la première extrémité (30), la seconde plateforme étant destinée à appliquer une seconde force de traction (F2) sur le système de support de chaîne (36) par l'intermédiaire de la seconde chaîne d'amarrage (28).

15. Système d'ancrage (10 ; 100) adapté pour ancrer une plateforme flottante (12) sur un fond marin rocheux (14), le système d'ancrage (10 ; 100) comprenant :
- au moins une partie de tranchée (20) située dans le fond marin (14) et s'étendant le long d'une direction longitudinale (L),
- une structure d'ancrage (22) située au moins partiellement dans la partie de tranchée (20), la structure d'ancrage (22) comprenant une cage d'armature en acier (34) s'étendant dans la direction longitudinale (L), et un système de support de chaîne (36) fixé à la cage d'armature (34) et comprenant au moins une plaque (38),
- du mortier (24) situé dans la partie de tranchée (20), la cage d'armature (34) et le système de support de chaîne (36) étant au moins partiellement entourés par le mortier (24), et
- une chaîne d'amarrage en acier (26) reliée au système de support de chaîne (36), la chaîne d'amarrage (26) étant destinée à être reliée à la plateforme flottante (12), la chaîne d'amarrage (26) ayant une partie extérieure (46) par rapport à la structure d'ancrage (22), la structure d'ancrage (22) ayant une première extrémité (30) et une seconde extrémité (32) opposées l'une à l'autre longitudinalement, la partie extérieure (46) étant destinée à s'étendre depuis la seconde extrémité (32) de l'autre côté de la première extrémité (30) par rapport à la seconde extrémité (32), la plateforme flottante (12) étant destinée à appliquer une force de traction (F) sur la structure d'ancrage (22) par l'intermédiaire de la chaîne d'amarrage (26).
